# EUROPEAN PATENT SPECIFICATION

(11) **EP 0 353 564 B1**
(45) Date of publication and mention of the grant of the patent: **23.08.1995**
(21) Application number: 89113434.8
(22) Date of filing: 21.07.1989
(51) Int. Cl.: E04C 2/16, B44C 5/04, B27N 3/10

(54) **Scored fiberboard having improved moldability**
Kerbmarkierte Faserplatte mit verbesserter Formbarkeit
Panneau à fibres de bois entaillé apte au moulage

(30) Priority: 05.08.1988 US 229197
(43) Date of publication of application: 07.02.1990
(73) Proprietor: MASONITE CORPORATION, Chicago Illinois 60606 (US)
(72) Inventor: Clarke, John T., St. Charles Illinois 60174 (US); Teodorson, Egon R.H., Jr., St. Charles Illinois 60174 (US)
(74) Representative: Fuchs Mehler Weiss

(56) References cited:
- EP-A- 0 248 248
- FR-A- 1 384 835
- GB-A- 1 510 412
- US-A- 2 800 423
- PATENT ABSTRACTS OF JAPAN, vol. 10, no. 83 (M-466)[2140], 2nd April 1986;& JP-A-60 224 530 (MAZDA K.K.) 08-11-1985

## Description

### BACKGROUND OF THE INVENTION

### Field of the Invention

This invention relates to the molding of a composite board of fibers between matched die sets to produce a high density, three dimensional board free of stretch marks and fractures. According to the invention, hardboard door facings may be molded with a high degree of fidelity to the contours and angles of the die set bearing the pattern of the desired profile.

### Description of Related Technology

The fibers of a rigid fiberboard, made by the consolidation of a water-felted mat under heat and pressure, are bound together primarily by hydrogen bonding and mechanical interlocking but also by the lignin native to the fibers. Such a fiberboard is difficult to consolidate into thin, non-planar panels without causing stretch marks and even fractures in deeply molded regions or regions adjacent thereto. In a molding press, the tension and compression forces pull and push the fibers in a rigid fiberboard apart, sometimes to the breaking point. This is a particularly significant problem with fiberboards having little or no resinous binders which would flow in response to said forces to take the place of the relatively inelastic fibers which cannot flow around the contours and angles of the die set.

The fibers of a dry felted wood fiber mat, on the other hand, are loosely bound together by a synthetic thermosetting resin and can flow along with the resin during hot pressure molding.

C. C. Heritage teaches a method for improving the surfaces and strengthening contoured parts of a molded hardboard panel in Canadian Patent No. 572, 073. Either dry- or water-felted wood fibers may be consolidated and molded to produce contoured hardboard, according to Heritage, by covering felted mats with an overlay of a thermoplastic or thermosetting resin in the form of a film, an impregnated fabric, or a coating.

According to the teachings of Nishibori in U.S. Patent No. 4,610,900, there is a problem when a synthetic resin is mixed with a cellulosic aggregate prior to molding. The aggregate, such as pulverized wood chips, is added to the resin to prevent the residual internal stress in the molded product which leads to warping and twisting thereof. Large amounts of the cellulosic aggregate, however, hamper the flowability of the resin and produce internal stresses in the resin product to be molded. Nishibori solves the problem by: first, heating and cooling the resin product; second, removing a skin layer of resin from the surface of the product by sanding or sandblasting; and third, cutting grooves out of the resulting exposed surface. This last operation suffers from the disadvantages of loss of the material removed to make the grooves and the expense of waste collection and removal.

JP 60-224 550(A) and GB 1 510 412 teach the perforation of boards to be molded. These perforations include the removal of materials leaving slits or pin-hole-like perforation leading to a weakened board product.

### SUMMARY OF THE INVENTION

It is an object of the invention to overcome one or more of the problems described above.

The invention provides a simple, non-destructive, and relatively inexpensive method of improving the moldability of consolidated fiberboards, especially water-felted wood fiberboards.

The invention also provides a rigid board of consolidated fibers which may be molded under pressure to a three dimensional board with high fidelity to the contours and angles of the mold.

The invention further provides an improved method of producing deeply molded hardboard from consolidated, water-felted wood fiberboards whereby the molded hardboard is free from stretch marks and tears or fractures.

According to the invention, one or more of the foregong objectives is accomplished by providing a scored board of consolidated fibers comprising a major face and an obverse face characterised by a plurality of discontinuous incisions extending within the surface region of each of said faces.

Preferably, the board of consolidated fibers is molded into a non-planar board, and preferably at least some of said discontinuous incisions are arranged on parallel lines and at least some of the fibers are severed with the ends of the severed fibers being substantially contiguous.

The invention also comprehends a method of molding a non-planar board, and an apparatus for cutting discontinuous incisions into the face of a board.

Further objects and advantages of the invention will be apparent to those skilled in the art from a review of the following detailed description, taken in conjunction with the drawings and the appended claims.

### BRIEF DESCRIPTION OF THE DRAWINGS

For a fuller understanding of this invention, reference should be made to the drawings, in which:
FIG. 1 is a perspective view of a fiberboard having discontinuous incisions therein in accordance with the invention.
FIG. 2 is a partially cut away perspective view of a fiberboard having discontinuous incisions being made into its upper surface parallel to its longitudinal edges as it moves under an assembly of co-axially mounted, toothed cutting disks.
FIG. 3 is a top plan view of the apparatus of FIG. 2 in association with a similar apparatus set at right angles thereto.
FIG. 4 is a side view of the fiberboard and apparatus of FIG. 2.
FIG. 5 is an enlarged cross section of a board of this invention showing cuts in its surface region.
FIG. 6 is a photograph of a deeply molded hardboard made from the incised fiberboard of this invention.
FIG. 7 is a photograph of a deeply molded hardboard made from a fiberboard of the prior art having no incisions.

### DETAILED DESCRIPTION OF THE INVENTION

According to the invention, a plurality of discontinuous incisions are made into the surface region of a major face of a fiberboard to sever fibers in the surface region without removing the fibers or other material therefrom, followed by molding the fiberboard. For the purposes of this invention, the surface region of a major face of the fiberboard extends inwardly for about one-third of the board's thickness. The discontinuous incisions define a line and may be made with a razor blade or similarly sharp cutting instrument having a thin blade, but it is preferred to use a cutting disk having circumferentially spaced notches in the blade.

The fiberboard may be a dry, consolidated mass of cellulosic fibers such as paper pulp, wood fibers, or other lignocellulosic fibers. Its density is typically in the range of about 160 to about 448 kg/m³ (10 to about 28 lbs. per cubic foot), preferably up to about 352 kg/m³ (22 lbs. per cubic foot). The invention is particularly advantageous in the molding of fiberboards made from long fibers such as redwood fibers. Although one important objective of the invention is to improve the moldability of wet-felted rigid fiberboards having no added binder, the invention is operative with fiberboards containing conventional binders such as resins, starch, tung oil and the like.

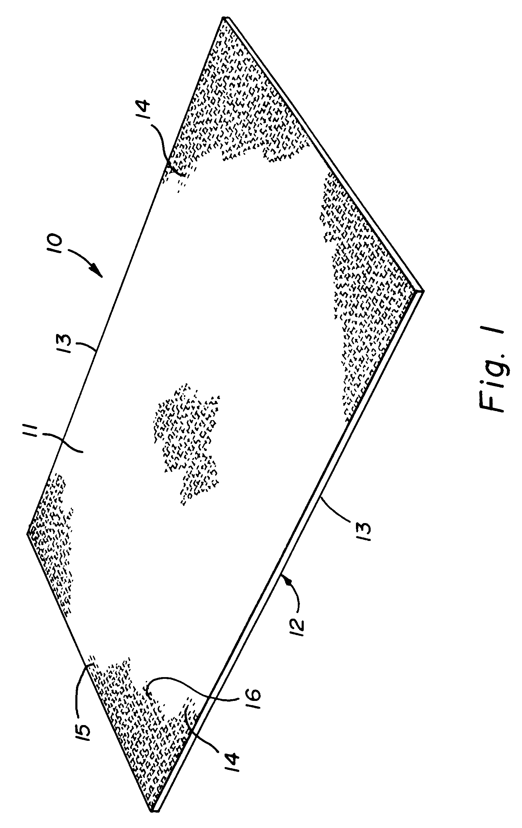

In FIG. 1, a scored fiberboard 10 defines upper and lower major faces 11 and 12, respectively, and longitudinal edges 13. Intermittent incisions 14 in the face 11 lie along imaginary lines parallel to the longitudinal edges 13 and intermittent incisions 15 lie along imaginary lines perpendicular to those edges. Fibers in the surface region of the board are severed but are not removed from the board. The severed ends of the fibers are displaced initially by the thin blade of a cutting instrument but the consequent compression of the adjacent masses of fiber and binder is relieved somewhat as the blade is removed and as the severed ends of the fibers move back to substantially contiguous positions in response to that compression.

A board having intermittent incisions in only one direction, i.e., along one or more lines parallel to or perpendicular to a longitudinal edge is useful when a design on the molded hardboard formed therefrom is to be unidirectional. Generally, however, it is preferred to make incisions along intersecting lines so that the board is adapted to improved moldability regardless of the orientation of the design on the die set. The intersecting sets of parallel lines defined by the incisions and the discontinuities therebetween are shown in FIG. 1 at right angles to one another but they may meet at acute angles. An advantage of the grid shown is the relative ease of designing and operating an apparatus for scoring a continuously moving board at right angles to the direction of movement as opposed to acute angles. The illustration in FIG. 1 of a grid of incisions on various portions of the face 11 is representative of a grid extending over the entire face of the board. It will also be understood that the face 12 may be incised in like manner.

The discontinuities 16 or intervals of uncut surface between incisions along the imaginary lines have a maximum length of about 12,7 mm (0.5 inch) but they must be at least about 2,54 mm (0.1 inch) long. It is these intervals of uncut fibers that preserve the integrity of the face of the board during the molding operation. It has been found that when continuous parallel incisions are made in a dry, water-felted board, the severed fibers pulled apart during the molding operation, leaving gaps in the surface of the molded board which gave it an unsightly, unacceptable appearance.

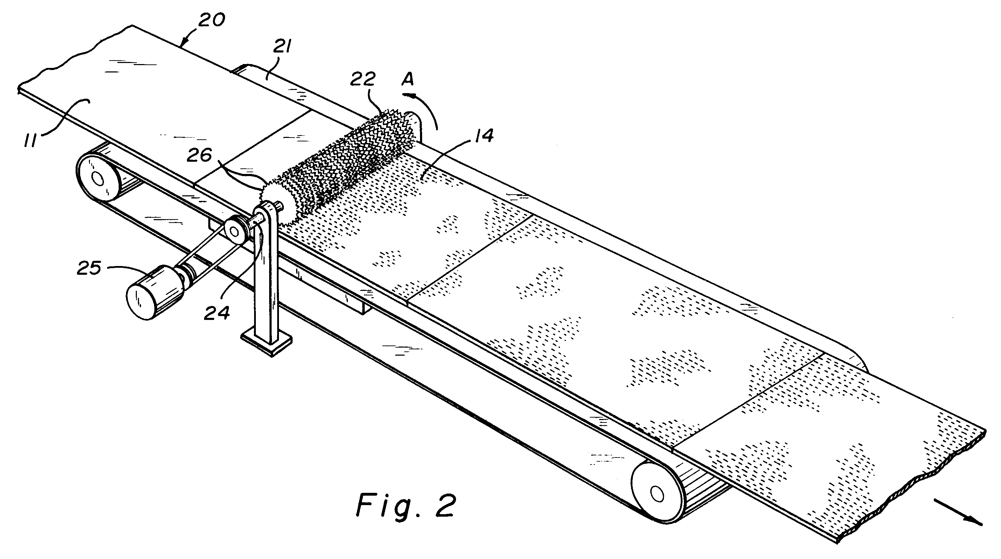

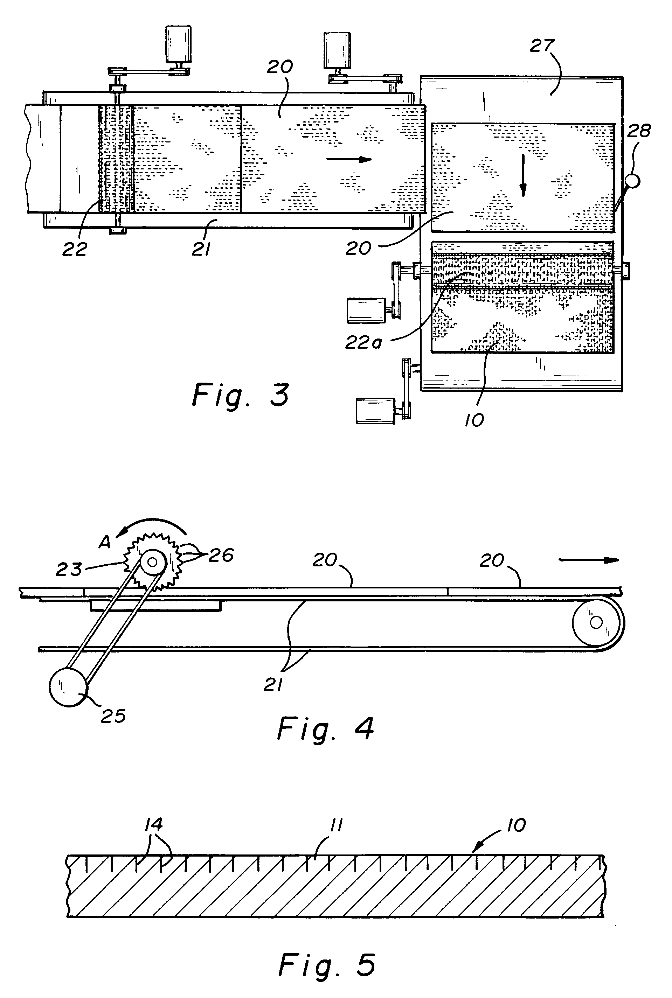

In FIG. 2, a fiberboard 20 is moved by a conveyor belt 21 into engagement with a rotating cylinder-like assembly 22 of toothed cutting disks 23 which are mounted co-axially in spaced-apart relation on a shaft 24 which is driven by a motor 25 in the direction indicated by an arrow A. The longitudinal incisions 14 are made as the deltoid teeth or blades 26 cut into the surface region of the face 11, as shown more clearly in FIG. 4.

As mentioned above, the incisions may be made by a razor blade, severance rather than separation of the fibers being a critical feature of this method, along with the intermittency of the incisions. Because of the limitations of strength of extremely thin blades, however, the blades 26 are preferably wedge-shaped, having a thickness of as much as about 2,54 mm (0.1 inch) at their origin on the disk 23 and a razor-thin cutting edge.

In FIG. 3, the transversely oriented incisions 15 are cut into the face 11 after the longitudinally oriented incisions 14 have been made. The board 20 is moved by the conveyor belt 21 onto a conveyor belt 27 which is activated when the leading edge of the board 20 has traversed the width of the belt 27 and bumped a trigger switch 28. The board 20 is then carried along a path at right angles to the belt 21 so that an assembly 22a of cutting disks may make the incisions 15. The fiberboard 10 is the product.

Several alternatives to an assembly of cutting disks are contemplated for use as the cutting apparatus of this invention, among which is a metal cylinder having multiple blades formed around its circumference by a machining operation. Such blades may be axially aligned for cutting the intermittent incisions 15 perpendicular to the longitudinal edges of the fiberboard or circumferentially aligned for cutting the intermittent incisions 14. The circumferentially aligned blades may have arcuate cutting edges instead of the saw tooth shape of the blades 26 but have divergent leading and trailing edges similar to those of the blades 26.

The depth and spacing of the incisions 14 are shown in FIG. 5. The depth of the incisions in each face of the fiberboard may be from about 10% to about 30% or even up to about one-third of the thickness of the board. For example, a 19,2 mm (0.75 inch) thick board may have incisions about 6,4 mm (0.25 inch) deep in the face which is to be pressed inwardly by the die having the negative of the desired profile. If the appearance of the obverse face of the molded hardboard is important, both faces will be incised to a depth appropriate to the contours and angles of the die set. The spacing between the parallel paths of the incisions 14 (and of the incisions 15) may be as large as about 12,7 mm (0.5 inch) but the fidelity of molding and the avoidance of stretch marks are better served by closer spacing, down to as little as about 2,54 mm (0.1 inch) or even less. It is preferred that a line of incisions in the board's face is generally oriented in the same direction as the margin of the design on a die and is located on the face so that there will be no more than about 6,4 mm (0.25 inch) between that line and the locus of contact points made by a die when the die set is closed upon the fiberboard.

Conventional conditions of temperature and pressure may be used for the deep molding of the scored fiberboard between matched die sets. A breathe press cycle is preferred over constant pressure. The surface of the scored fiberboard may be sprayed very lightly with water or an aqueous solution containing 20 wt.% urea and 10 wt.% of Glidden's Fibertight sealer, or equivalent materials, just prior to molding. The specific gravity of the molded hardboard is about 1.0-1.2 and the internal bond strength is 689-1378 kN/m² (100-200 psi).

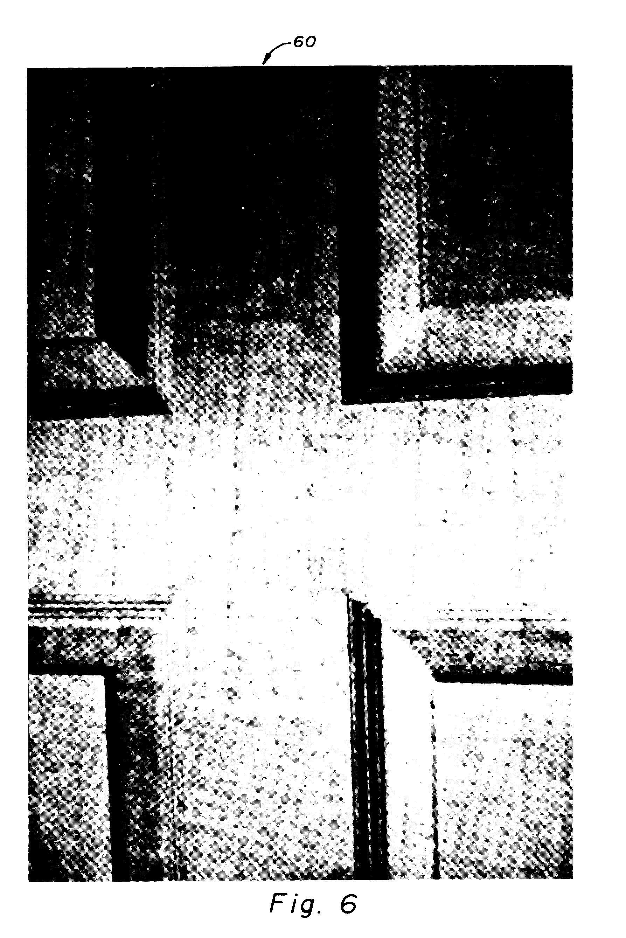

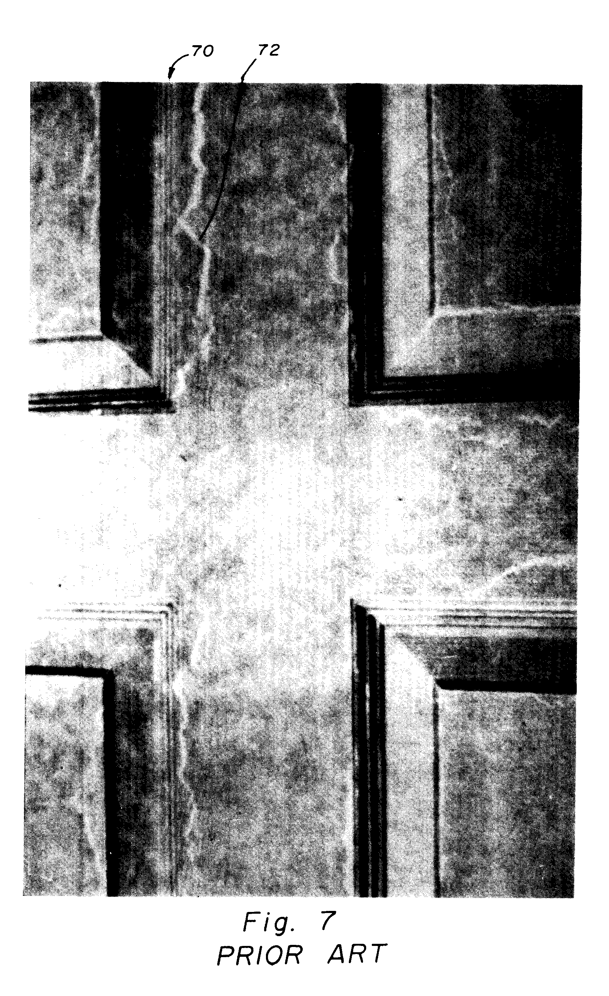

Molded hardboards 60 and 70 of FIGS. 6 and 7, respectively, were made under substantially the same conditions from redwood fiberboards.

A comparison of the hardboard 60 made according to the invention and the hardboard 70 made according to the prior art demonstrates the superiority of the product made from the incised fiberboard of this invention. Stretch marks 72, clearly visible in the board 70, are absent from the board 60. These stretch marks are visible as fuzzy lines even on a painted hardboard because of the uneven response to the paint.

It will be appreciated that the invention may be practiced in various ways within the scope of the following claims.

## Claims

1. A scored board of consolidated fibers (10) comprising a major face (11) and an obverse face (12), characterised by a plurality of discontinuous incisions (14, 15) extending only within the surface region of each of said faces.

2. The board of claim 1 wherein at least some of said discontinuous incisions (14) are arranged on parallel lines, at least some of said fibers are severed, and the end of said severed fibers are substantially contiguous.

3. The board of claim 1 wherein the depth of said incisions (14) is at least about 2.54 mm (0.1 inches), preferably from about 10% to about one third of the thickness of said board (10).

4. The board of claim 1 wherein at least some of said incisions (14) lie along at least one straight line, preferably along a plurality of parallel or intersecting straight lines.

5. The board of claim 4 wherein the distance between adjacent incisions (14) on said straight line is a maximum of about 12.7 mm (0.5 inches) and preferably the maximum spacing between adjacent parallel lines is about 12.7 mm (0.5 inches).

6. The board of claim 1 whrein at least some of said incisions (14, 15) lie along a plurality of intersecting straight lines, at least some of said intersecting lines intersect at right angles, and said incisions preferably extend over substantially the entirety of said face (11).

7. A method of molding a non-planar board comprising the steps of:
providing a dry board (20) of consolidated fibers comprising a major face (11) and an obverse face (12);
making a plurality of discontinuous incisions (14) extending only within the surface region of each of said faces of said dry board (20); and
compressing said dry board with a die set bearing a pattern of a desired profile.

8. The method of claim 7 wherein:
said dry board (20) is provided by water-felting and consolidating fibers to make a fiberboard and drying the fiberboard; and
said dry board is compressed with a heated die set bearing a pattern of the desired profile.

9. The method of either claim 7 or 8 wherein at least some of said incisions (14) are made along at least one straight line, preferably along a plurality of parallel or intersecting straight lines.

10. The method of any one of claims 7 to 9 wherein said incisions (14) sever fibers in said surface region and leave the ends of said severed fibers substantially in place.

11. The method of any one of claims 7 to 10 wherein said incisions (14) are made to a depth of at least about 2.54 mm (0.1 inches) preferably from about 10% to about 30% of the thickness of said dry board (20).

12. The method of any one of claims 7 to 11 wherein at least some of said incisions (14) are generally oriented with a margin of said pattern and are laterally disposed no more than about 6.4 mm (0.25 inches) from points where said dry board (10) is molded.

13. The method of any one of claims 7 to 12 wherein said incisions (14) are made in substantially the entirety of said face (11).

14. The method of any one of claims 9 to 13 wherein discontinuities between incisions (14) on said line are generally a maximum of about 12.7 mm (0.5 inches) long or at least some of said incisions (14) are made along a plurality of parallel straight lines spaced a maximum of about 12. 7 mm (0.5 inches) apart.

15. The method of any one of claims 9 to 14 wherein at least some of said intersecting lines are at right angles.

16. An apparatus for cutting discontinuous incisions into a face (11) of a board (20), said apparatus having means (21) for transporting said board linearly, a cylindrical cutter (22) mounted above said transporting means and having a multiplicity of blades (26) arrayed in circumferential alignment around the circumference of said cutter, and means (25) for rotating said cutter in cutting engagement with said board face; the apparatus being characterised by:
said blades each comprising a first arcuate cutting edge capable of extending below the plane of said board face, and second and third cutting edges on the same plane as the first cutting edge and diverging from said first cutting edge to common base points between adjacent blades in the same plane.

17. The apparatus of claim 16 wherein said blades (26) are spaced up to about 12.7 mm (0.5 inches) apart.

18. The board of claim 1 molded into a non-planar hardboard (60), preferably a hardboard having a paneled appearance.

19. The board of claim 1 wherein said fibers are cellulosic and preferably wood fibers, and said board is consolidated from a water-felted mat and preferably bound together by hydrogen bonding, mechanical locking, and native lignin.

20. The board of claim 19 molded in a contoured die set into a hardboard (60), preferably a door facing, with a high degree of fidelity to the contours of the die set.

21. The board of claim 3 wherein the depth of said incisions (14) ranges from about 10% to about one third of the thickness of said board (10).

22. The board of claim 4 wherein at least some of said incisions (14) lie along a plurality of parallel or intersecting straight lines.

23. The board of claim 4 wherein the maximum spacing between adjacent parallel lines is about 12.7 mm (0.5 inches).

24. The board of claim 6 wherein the incisions (14, 15) lying along a plurality of intersecting straight lines extend over substantially the entirety of said face (11).

25. A method of making a molded construction board (60) having a specific gravity of about 1.0-1.2, in which a dry fiberboard (20) of consolidated cellulosic fibers having a density of about 160 to about 448 kg/m³ (10 to 28 pounds per cubic foot), preferably up to about 352 kg/m³ (22 pounds per cubic foot), is compressed in a die set bearing a non-planar pattern of a desired molded profile, the method being characterised by:
making a plurality of discontinuous incisions (14, 15) along each of a plurality of lines extending only within the surface region of at least one face (11) of the fiberboard before the fiberboard is compressed.

26. A method according to claim 25, characterized by making a plurality of discontinuous incisions (14, 15) along each of a plurality of lines extending only within the surface region of both faces (11, 12) of the fiberboard.

27. A method according to claim 25, characterized by making a plurality of discontinuous incisions (14, 15) along each of a plurality of lines extending only within the surface region of at least one face (11) of the fiberboard wherein at least some of the lines along which the incisions are made are intersecting.

## Patentansprüche

1. Kerbmarkierte Platte aus verfestigten Fasern (10), umfassend eine Hauptfläche (11) und eine Gegenfläche (12), gekennzeichnet durch eine Vielzahl von diskontinuierlichen Einschnitten (14, 15), die sich nur in der Oberfläche jeder der Flächen erstrecken.

2. Platte nach Anspruch 1, wobei wenigstens einige der diskontinuierlichen Einschnitte (14) auf parallelen Linien angeordnet sind, wenigstens einige der Fasern aufgetrennt sind und die Enden der aufgetrennten Fasern im wesentlichen aneinandergrenzen.

3. Platte nach Anspruch 1, wobei die Tiefe der Einschnitte (14) wenigstens ungefähr 2,54 mm (0,1 inch) beträgt und vorzugsweise bei ungefähr 10 % bis ungefähr ein Drittel der Dicke der Platte (10) liegt.

4. Platte nach Anspruch 1, wobei wenigstens einige der Einschnitte (14) wenigstens entlang einer geraden Linie liegen, vorzugsweise entlang mehrerer paralleler oder sich schneidender gerader Linien.

5. Platte nach Anspruch 4, wobei der Abstand zwischen benachbarten Einschnitten (14) auf der geraden Linie maximal ungefähr 12,7 mm (0,5 inch) beträgt und vorzugsweise der maximale Abstand zwischen benachbarten parallelen Linien ungefähr 12,7 mm (0,5 inch) beträgt.

6. Platte nach Anspruch 1, wobei wenigstens einige der Einschnitte (14, 15) entlang mehrerer sich schneidender gerader Linien liegen, sich wenigstens einige der sich schneidenden Linien sich unter einem rechten Winkel schneiden und sich die Einschnitte im wesentlichen über die Gesamtheit der Fläche (11) erstrecken.

7. Ein Verfahren zum Pressen einer unebenen Platte, umfassend die Schritte:
- Vorgabe einer trockenen Platte (20) aus verfestigten Fasern, die eine Hauptfläche (11) und eine Gegenfläche (12) aufweist;
- Anbringung einer Vielzahl von diskontinuierlichen Einschnitten (14), die sich nur innerhalb der Oberfläche von jeder der Flächen der trockenen Platte (20) erstrecken; und
- Pressen der trockenen Platte mit einer Formpresse, die ein Muster eines gewünschten Profils aufweist.

8. Verfahren nach Anspruch 7, wobei
- die trockene Platte (20) durch wassergetränkte und verfestigte Fasern vorgegeben ist, um eine Faserplatte herzustellen und Trocknung der Faserplatte; und
- die trockene Platte mit einer erhitzten Preßform gepreßt wird, die ein Muster des gewünschten Profils trägt.

9. Verfahren nach einem der Ansprüche 7 oder 8, wobei wenigstens einige der Einschnitte (14) entlang wenigstens einer geraden Linie erfolgen, vorzugsweise entlang einer Vielzahl von parallelen oder sich schneidenden geraden Linien.

10. Verfahren nach einem der Ansprüche 7 bis 9, wobei die Einschnitte (14) Fasern in dem Oberflächenbereich auftrennen und die Enden der aufgetrennten Fasern im wesentlichen an Ort und Stelle belasten.

11. Verfahren nach irgendeinem der Ansprüche 7 bis 10, wobei die Einschnitte (14) bis zu einer Tiefe von wenigstens ungefähr 2,54 mm (0,1 inch) gemacht werden, vorzugsweise von ungefähr 10 % bis ungefähr 30 % der Dicke der trockenen Platte (20).

12. Verfahren nach irgendeinem der Ansprüche 7 bis 11, wobei wenigstens einige der Einschnitte (14) im allgemeinen zu einem Rand des Musters ausgerichtet sind und seitlich um nicht mehr als ungefähr 6,4 mm (0,25 inch) von Punkten angeordnet sind, an denen die trockene Platte (10) gepreßt ist.

13. Verfahren nach irgendeinem der Ansprüche 7 bis 12, wobei die Einschnitte (14) im wesentlichen über die Gesamtheit der Fläche (11) erfolgen.

14. Verfahren nach irgendeinem der Ansprüche 9 bis 13, wobei die Diskontinuitäten zwischen Einschnitten (14) auf der Linie im allgemeinen maximal ungefähr 12,7 mm (0,5 inch) lang sind oder wenigstens einige der Einschnitte (14) entlang mehrerer paralleler gerader Linien erfolgen, die maximal ungefähr 12,7 mm (0,5 inch) voneinander entfernt sind.

15. Verfahren nach irgendeinem der Ansprüche 9 bis 14, wobei wenigstens einige der sich schneidenden Linien unter einem rechten Winkel liegen.

16. Vorrichtung zum Einschneiden diskontinuierlicher Einschnitte in eine Fläche (11) einer Platte (20), wobei die Vorrichtung aufweist: eine Einrichtung (21) zum linearen Transport der Platte, einen zylindrischen Schneidkopf (22), der oberhalb der Transporteinrichtung angeordnet ist und mehrere Klingen (26) besitzt, die kreisförmig um den Umfang des Schneidkopfes angeordnet sind und eine Einrichtung (25) für die Drehung des Schneidkopfes im Schneideingriff mit der Plattenoberfläche, wobei die Vorrichtung dadurch gekennzeichnet ist, daß die Klingen jeweils eine erste gebogene Schneidkante umfassen, die sich unterhalb der Ebene der Plattenoberfläche erstrecken und zweite und dritte Schneidkanten in der gleichen Ebene wie die erste Schneidkante und von der ersten Schneidkante zu gemeinsamen Basispunkten zwischen benachbarten Klingen in der gleichen Ebene auseinanderlaufend umfassen.

17. Vorrichtung nach Anspruch 16, wobei die Klingen (26) um ungefähr 12,7 mm (0,5 inch) voneinander beabstandet sind.

18. Platte nach Anspruch 1, gepreßt in eine unebene Hartplatte (60), vorzugsweise einer Hartplatte mit der Erscheinungsform einer Panele.

19. Platte nach Anspruch 1, wobei die Fasern Zellulose und vorzugsweise Holzfasern sind und die Platte aus einer wassergetränkten Matte verfestigt wird und vorzugsweise durch einen wässrigen Kleber, eine mechanische Verblockung und natürliches Lignin zusammengehalten wird.

20. Platte nach Anspruch 19 in einer konturierten Preßform in einer Hartplatte (60) gepreßt, vorzugsweise Tür-Oberfläche mit einem hohen Maß an Wiedergabetreue an die Konturen der Preßform.

21. Platte nach Anspruch 3, wobei die Tiefe der Einschnitte (14) von ungefähr 10 % bis ungefähr ein Drittel der Dicke der Platte (10) reicht.

22. Platte nach Anspruch 4, wobei wenigstens einige der Einschnitte (14) entlang einer Vielzhal von parallelen oder sich schneidenden geraden Linien liegen.

23. Platte nach Anspruch 4, wobei der maximale Abstand zwischen benachbarten parallelen Linien ungefähr 12,7 mm (0,5 inch) beträgt.

24. Platte nach Anspruch 6, wobei die Einschnitte (14, 15) entlang einer Vielzahl von sich schneidenden geraden Linien liegen, die sich im wesentlichen über die Gesamtheit der Fläche (11) erstrecken.

25. Verfahren zur Herstellung einer gepreßten Konstruktionsplatte (60) mit einem spezifischen Gewicht von ungefähr 1,0-1,2, bei dem eine trockene Faserplatte (20) aus verfestigten Zellulosefasern mit einer Dichte von ungefähr 160 bis ungefähr 448 kg/m³ (10 bis 28 Pfund pro Kubikfuß), vorzugsweise bis zu ungefähr 352 kg/m³ (22 Pfund pro Kubikfuß) in einer Formpresse gepreßt wird, die ein unebenes Muster eines gewünschten Preßprofiles trägt, wobei das Verfahren gekennzeichnet ist durch:
- Anbringung einer Vielzahl von diskontinuierlichen Einschnitten (14, 15) entlang einer Vielzhal von Linien, die sich nur in dem Oberflächenbereich von wenigstens einer Fläche (11) der Faserplatte erstrecken, bevor die Faserplatte gepreßt wird.

26. Verfahren nach Anspruch 25, gekennzeichnet durch die Anbringung einer Vielzahl von diskontinuierlichen Einschnitten (14, 15) entlang jeder Vielzahl von Linien, die sich nur in dem Oberflächenbereich beider Flächen (11, 12) der Faserplatte erstrecken.

27. Verfahren nach Anspruch 25, gekennzeichnet durch die Anbringung einer Vielzahl von diskontinuierlichen Einschnitten (14, 15) entlang einer Vielzahl von Linien, die sich nur in dem Oberflächenbereich wenigstens einer Fläche (11) der Faserplatte erstrecken, wobei wenigstens einige der Linien entlang derer die Einschnitte erfolgen, sich schneiden.

## Revendications

1. Panneau entaillé de fibres consolidées (10), comprenant une face principale (11) et une face opposée (12), caractérisé par une pluralité d'incisions discontinues (14, 15) s'étendant seulement dans la zone de surface de chacune desdites faces.

2. Panneau selon la revendication 1, dans lequel au moins certaines desdites incisions discontinues (14) sont agencées sur des lignes parallèles, au moins certaines desdites fibres sont coupées, et les extrémités desdites fibres coupées sont sensiblement contiguës.

3. Panneau selon la revendication 1, dans lequel la profondeur desdites incisions (14) est d'au moins environ 2,54 mm (0,1 pouce), de préférence d'environ 10% à environ un tiers de l'épaisseur dudit panneau (10).

4. Panneau selon la revendication 1, dans lequel au moins certaines desdites incisions (14) s'étendent le long d'au moins une ligne droite, de préférence le long d'une pluralité de lignes droites parallèles ou qui se coupent.

5. Panneau selon la revendication 4, dans lequel la distance entre des incisions adjacentes (14) sur ladite ligne droite est d'au maximum environ 12,7 mm (0,5 pouce) et, de préférence, l'espacement maximal entre des lignes parallèles adjacentes est d'environ 12,7 mm (0,5 pouce).

6. Panneau selon la revendication 1, dans lequel certaines desdites incisions (14, 15) s'étendent le long d'une pluralité de lignes droites qui se coupent, au moins certaines desdites lignes qui se coupent, se coupent à angle droit, et lesdites incisions s'étendent de préférence sensiblement sur toute ladite face (11).

7. Procédé de moulage d'un panneau non plan, comprenant les étapes consistant à :
- fournir un panneau sec (20) de fibres consolidées comprenant une face principale (11) et une face opposée (12) ;
- réaliser une pluralité d'incisions discontinues (14) s'étendant seulement dans la zone de surface de chacune desdites faces dudit panneau sec (20) ; et
- comprimer ledit panneau sec avec un moule portant un motif d'un profil souhaité.

8. Procédé selon la revendication 7, dans lequel :
- ledit panneau sec (20) est réalisé par feutrage à l'eau et consolidation de fibres pour fournir un panneau de fibres, et séchage du panneau de fibres ; et
- ledit panneau sec est comprimé avec un moule chauffé portant un motif du profil souhaité.

9. Procédé selon la revendication 7 ou 8, dans lequel au moins certaines desdites incisions (14) sont réalisées le long d'au moins une ligne droite, de préférence d'une pluralité de lignes droites parallèles ou qui se coupent.

10. Procédé selon l'une quelconque des revendication 7 à 9, dans lequel lesdites incisons (14) coupent des fibres dans ladite zone de surface et laissent les extrémités desdites fibres coupées sensiblement en place.

11. Procédé selon l'une quelconque des revendication 7 à 10, dans lequel lesdites incisions (14) sont réalisés à une profondeur d'au moins environ 2,54 mm (0,1 pouce), de préférence d'environ 10% à environ 30% de l'épaisseur dudit panneau sec (20).

12. Procédé selon l'une quelconque des revendication 7 à 11, dans lequel au moins certaines desdites incisions (14) sont généralement orientées avec une marge dudit motif et sont latéralement disposées à pas plus d'environ 6,4 mm (0,25 pouce) de points où ledit panneau sec (10) est moulé.

13. Procédé selon l'une quelconque des revendication 7 à 12, dans lequel lesdites incisions (14) sont réalisées sur sensiblement la totalité de ladite face (11).

14. Procédé selon l'une quelconque des revendications 9 à 13, dans lequel des discontinuités entre des incisions (14) sur ladite ligne ont généralement une longueur d'au maximum 12,7 mm (0,5 pouce) ou au moins certaines desdites incisions (14) sont réalisées le long d'une pluralité de lignes droites parallèles espacées d'au maximum environ 12,7 mm (0,5 pouce).

15. Procédé selon l'une quelconque des revendications 9 à 14, dans lequel au moins certaines desdites lignes qui se coupent sont à angle droit.

16. Appareil pour réaliser des incisions discontinues dans une face (11) d'un panneau (20), ledit appareil présentant des moyens (21) pour transporter ledit panneau de façon linéaire, un couteau cylindrique (22) monté au-dessus desdits moyens de transport et présentant une pluralité de lames (26) disposées en alignement circonférentiel autour de la circonférence dudit couteau, et des moyens (25) pour faire tourner ledit couteau en engagement de coupe avec ladite face du panneau, l'appareil étant caractérisé par le fait que lesdites lames comprennent chacune un premier bord de coupe arqué capable de s'étendre au-dessous du plan de ladite face du panneau, et des second et troisième bords de coupe dans le même plan que le premier bord de coupe et divergeant dudit premier bord de coupe vers des points de base communs entre des lames adjacentes dans le même plan.

17. Appareil selon la revendication 16, dans lequel lesdites lames (26) sont espacées d'environ 12,7 mm (0,5 pouce).

18. Panneau selon la revendication 1, moulé en un panneau de fibres dur non plan (60), de préférence un panneau dur ayant une apparence de lambris.

19. Panneau selon la revendication 1, dans lequel lesdites fibres sont à base de cellulose et de préférence des fibres de bois, et ledit panneau est consolidé à partir d'un matelas feutré à l'eau et de préférence lié ensemble par une liaison hydrogène, un verrouillage mécanique et de la lignine naturelle.

20. Panneau selon la revendication 19, moulé dans un moule profilé en un panneau de fibre dur (60), de préférence un parement de porte, avec un degré élevé de fidélité aux contours du moule.

21. Panneau selon la revendication 3, dans lequel la profondeur desdites incisions (14) vaut d'environ 10% à environ un tiers de l'épaisseur dudit panneau (10).

22. Panneau selon la revendication 4, dans lequel au moins certaines desdites incisions (14) s'étendent le long d'une pluralité de lignes droites parallèles ou qui se coupent.

23. Panneau selon la revendication 4, dans lequel l'espacement maximal entre des lignes parallèles adjacentes est d'environ 12,7 mm (0,5 pouce).

24. Panneau selon la revendication 6, dans lequel les incisions (14, 15) s'étendant le long d'une pluralité de lignes droites qui se coupent, s'étendent sur sensiblement toute ladite face (11).

25. Procédé pour réaliser un panneau de construction moulé (60) ayant une densité d'environ 1,0-1,2, dans lequel un panneau de fibres sec (20) en fibres cellulosiques consolidées, ayant une masse volumique d'environ 160 à environ 448 kg/m³ (10 à 28 livres par pied cubique), de préférence jusqu'à environ 352 kg/m³ (22 livres par pied cubique), est comprimé dans un moule portant un motif non plan d'un profil moulé souhaité, le procédé étant caractérisé par le fait de réaliser une pluralité d'incisions discontinues (14, 15) le long de chacune d'une pluralité de lignes s'étendant seulement dans la zone de surface d'au moins une face (11) du panneau de fibres avant la compression du panneau de fibres.

26. Procédé selon la revendication 25,
caractérisé par le fait de réaliser une pluralité d'incisions discontinues (14, 15) le long de chacune d'une pluralité de lignes s'étendant seulement dans la zone de surface des deux faces (11, 12) du panneau de fibres.

27. Procédé selon la revendication 25,
caractérisé par le fait de réaliser une pluralité d'incisions discontinues (14,15) le long de chacune d'une pluralité de lignes s'étendant seulement dans la zone de surface d'au moins une face (11) du panneau de fibres, dans lequel au moins certaines des lignes le long desquelles les incisions sont faites, se coupent.
